# EUROPEAN PATENT APPLICATION

(11) **EP 4 495 860 A1**
(43) Date of publication of application: **22.01.2025**
(21) Application number: 23769381.7
(22) Date of filing: 17.03.2023
(51) Int. Cl.: G06Q 30/018, G06F 21/64, G06F 11/30, H04L 9/00

(54) **METHOD, DEVICE AND SYSTEM FOR MEASURING PROCESS PERFORMANCE AND/OR FOR AUTOMATING CERTIFICATION PROCEDURES**

(30) Priority: 18.03.2022 BR 102022005063
(71) Applicant: Remer, Ricardo Amaral, São Paulo 01411-001 (BR); Carvalho, Rogério Atem De, 28030-131 Campos dos Goytacazes (BR); Fernandes, Rodrigo Martins, 28030-570 Campos dos Goytacazes (BR)
(72) Inventor: Remer, Ricardo Amaral, São Paulo 01411-001 (BR); Carvalho, Rogério Atem De, 28030-131 Campos dos Goytacazes (BR); Fernandes, Rodrigo Martins, 28030-570 Campos dos Goytacazes (BR)
(74) Representative: Currado, Luisa
(86) International application number: PCT/BR2023/050091
(87) International publication number: WO 2023/173191

(57) **Abstract**

The present invention is in the fields of measuring process performance and automating certification procedures. More specifically, it provides a device, system, and method for measuring the performance of projects and production processes, in addition to providing performance metrics or coefficients. In one aspect, the invention provides a device, system, and method for automating certification procedures for issuing digital assets or tokens, which may be an integrated certification. The invention is particularly useful as a tool for automating certification procedures that involve measuring, documenting, and tokenizing, on blockchain, distributed digital ledger or distributed digital record platforms or technologies, various physical quantities related to production processes or natural phenomena. The invention provides for the generation of metrics or coefficients related to said certification, which are useful for increasing the precision/accuracy and productivity of certification processes and are also useful as parameters for managing project risk, including environmental risk. In one aspect, the invention enables certification for small projects and attitudes. The invention is also particularly useful in the field of certifying sustainable projects and attitudes, being a useful tool for proving that requirements have been met to obtain tax benefits in environmental incentive programs.

## Description

### Field of Invention

The present invention is in the fields of measuring process performance and automating certification procedures. More specifically, it provides a device, system, and method for measuring the performance of projects and production processes, in addition to providing performance metrics or coefficients. In one aspect, the invention provides a device, system, and method for automating certification procedures for issuing digital assets or tokens, which may be an integrated certification. The invention is particularly useful as a tool for automating certification procedures that involve measuring, documenting, and tokenizing, on blockchain, distributed digital ledger or distributed digital record platforms or technologies, various physical quantities related to production processes or natural phenomena. The invention provides for the generation of metrics or coefficients related to said certification, which are useful for increasing the precision/accuracy and productivity of certification processes and are also useful as parameters for managing project risk, including environmental risk. In one aspect, the invention enables certification for small projects and attitudes. The invention is also particularly useful in the field of certifying sustainable projects and attitudes, being a useful tool for proving that requirements have been met to obtain tax benefits in environmental incentive programs.

### Background of the Invention

The technical field of process measurement technologies and process certification includes a variety of approaches. Particularly in the field of certification, there are substantial technical difficulties that limit the productivity or accuracy of certification processes. The present invention provides a solution to these problems.

In the context of processes that are at least partially integrated with emerging technologies such as Distributed Ledger Technology (DLT), where Blockchain currently stands out, there is a need for improved measurement and certification approaches. The present invention provides a solution to these problems.

DLT technologies contribute to maintaining the information integrity attribute, as they guarantee the immutability of the data stored or recorded in them. DLTs also contribute to maintaining the availability attribute, notably when such technologies are implemented in the form of a distributed network of computers, called nodes, where the unavailability of a node does not affect the availability of the information that can be obtained by consulting other nodes participating in this distributed network. However, the steps that precede ledgerization, that is, documentation in DLTs, do not benefit from the integrity attributes, so that the processes integrated with DLTs have a weakness in this attribute. The present invention provides an approach to provide metrics and coefficients useful for improving the quality and accuracy of steps involved in certification processes/procedures, being particularly useful for providing greater reliability in said processes. In one aspect, the invention provides automation of at least part of the certification procedures. The invention is particularly useful as a tool for certifying entities.

In the specific field of sustainability, several initiatives called "sustainable" have emerged, but they face some technical problems, among them the difficulty of measuring the results and the difficulty of certifying the processes. The present invention is particularly applicable to this technical field.

The State of the Art that circumscribes the invention without anticipating or suggesting it includes the following documents.

WO2019018278, titled Distributed Ledger Certification, was filed by Amazon Tech, and published in January 2019. This document describes aspects of an interface for tracking and verifying an item in a supply chain using a distributed digital network. In the approach described in this document, information is included when creating a product record in a catalog and integrated into the distributed digital network, and a certification authority may be included to verify that the items received correspond to the items included in the catalog, based on one or more certification rules. The certification information may be presented dynamically.

WO2021124233, entitled Data certification process, Data certification system and Certification transaction, was filed by three Italian inventors and published in June 2021. Said document discloses a process for certifying data that comprises the following steps: associating a data to be certified with a certification seal in an unalterable way by feeding said association to a distributed digital network; obtaining at least one log data from a log record that is created, managed and stored by a telecommunications network provider independent of the distributed network, and using it as a certification seal; monitoring the association at any time by comparing the certification seal in the transaction in the distributed network with the log present in the independent log record and verifying the correspondence between both.

WO2019203790, entitled Workflow Transactions, was filed by HP, and published in October 2019. Said document discloses a method comprising: attaching multiple process transactions in a distributed digital network; verifying the sequence of the multiple transactions using verification criteria; generating a certification transaction that attests to the verified sequence according to a visible policy; compiling the multiple certification transactions into respective process transactions; and generating a blockchain certification transaction.

The co-pending patent application BR 10 2022 003697 7, entitled Device and System for Measuring Quantities, Data Processing and Integration with a Digital Asset or Token Issuance System, was filed by Eneltec, has inventors in common with the present invention and is still confidential. Said document discloses a device and system for measuring quantities, data processing and integration with a digital asset or token issuance system, such as those backed by conservation and/or sustainability metrics. The device of the invention is particularly useful as a tool for measuring, documenting, and tokenizing, in blockchain, distributed digital registry or distributed digital ledger platforms or technologies, quantities that have a direct relationship with metrics related to sustainable attitudes and/or projects or energy/environmental conservation.

The co-pending patent application BR 10 2022 003708 6, entitled Integrated System and Method for the Issuance of Digital Assets or Tokens Backed by Authenticated Conservation Metrics, was filed by the present inventors and is still confidential. Said document discloses a useful system for the measurement, documentation, authentication, and tokenization, in blockchain, distributed digital registry or distributed digital ledger platforms or technologies, of metrics related to sustainable or environmental conservation attitudes and/or projects. The system described in said document, also referred to as ThingsGo.Online or TGO, comprises: one or more devices for measuring physical quantities associated with the conservation or recovery of environmental assets; and a distributed digital recording process of the authenticated metrics. In one embodiment, said system additionally comprises a device for verifying the authenticity of the hardware and software that process the measured signals and that make up the measuring device. In one embodiment, the aforementioned system provides the tokenization of energy savings related to the use of DAG (Direct Acyclic Graphs) in the consensus mechanism of distributed digital registry technologies, such as the XRP Ledger, being a useful tool to boost investments in environmental recovery or conservation projects, in addition to providing real, online and publicly auditable backing for digital assets.

In addition to being useful for improving the quality of certification processes and for their automation, the invention provides for the generation of metrics or coefficients relating to the processes involved or natural phenomena in said certification, with such metrics or coefficients being particularly useful as parameters for the management of multiple economically relevant operations.

From what can be inferred from the literature researched, no documents were found anticipating or suggesting the teachings of the present creation/secret/invention. The invention now revealed has, in the eyes of the inventors, novelty and inventive activity compared to the state of the art.

### Summary of the Invention

The present invention provides a useful solution for improving quality and automating certification processes and procedures. In one aspect, the invention provides a device, system, and method for measuring the performance of projects and production processes or natural phenomena, in addition to providing coefficients of performance. In one aspect, the invention provides a device, system, and method for automating at least part of the certification processes and procedures.

The invention provides for the generation of metrics or coefficients useful for increasing precision/accuracy, productivity of certification processes, and/or for project risk management, including those involving environmental risk.

The invention makes certification possible for small projects and sustainable attitudes.

The invention is also particularly useful in the field of certifying sustainable projects and attitudes, being a useful tool for proving that requirements have been met to obtain tax benefits in environmental incentive programs.

In one aspect, the invention provides a device, system, and method for certifying processes for issuing digital assets or tokens, which may be an integrated certification. The device of the invention is particularly useful for measuring, documenting, and tokenizing, in blockchain, distributed digital ledger or distributed digital registry platforms or technologies, quantities related to the certification of production processes, as well as generating coefficients related to such certification that are useful for multiple economically relevant operations.

In one aspect, the invention provides an approach for associating tokenization with certification processes. In one embodiment, the invention provides a certification meta-method associated with a measurement device, herein referred to as CertMeter, that provides for the use of objective classification metrics and an inference that provides for the generation of one or more numerical coefficients, which are employed in processes in order to make the certification results objective.

In one embodiment, the invention comprises a certification tokenization subprocess, being useful for the publication, authentication, and backup of certification results.

In one embodiment of the invention, the device, system, and method of the invention provides for the certification of processes and projects with the issuance of digital assets or tokens, and it comprises:
i) a device for measuring and metricizing quantities associated with certification;
(ii) a processor and a storage medium with computer-processed program instructions; and
iii) communication interfaces with computer networks, to provide the recording of measurements in Blockchain or Distributed Ledger Technology (DLT); in which said processor executes a certification meta-method integrated into said device; and a distributed or blockchain digital recording process of the metrics.

In one embodiment, the device and method of the invention further comprises an inference engine that provides for the generation of one or more numerical coefficients.

In one embodiment, the device and method of the invention further comprises a certification tokenization subprocess for the publication, authentication, and/or backup of the certification results.

In one embodiment, the device and method of the invention comprise:
- a certification meta-method integrated with a device for metrication of this certification and a distributed or blockchain digital registration process of the authenticated metrics; and
- a device for measuring quantities associated with certification and an inference machine capable of generating one or more coefficients that objectively aggregate the results of this certification.

The invention is particularly useful for the online documentation of environmental certification processes, which serve as collateral for digital assets. The invention is a useful tool for boosting investments in green finance, in environmental recovery or conservation projects, in addition to providing real and online collateral for digital assets. The invention, by providing an innovative approach to certification processes, through automation, reduces costs, reduces subjectivity of human assessments, provides improved quality and traceability of certification procedures. In one aspect, the at least partial automation of processes involved in certification reduces the cost to the point of making certification viable for small projects and attitudes, being particularly advantageous in the field of certification of sustainable projects and attitudes.

These and other objects of the invention will be immediately acknowledged by those skilled in the art and by companies with interests in the segment, and it will be described in sufficient detail for their reproduction, in the following description.

### Brief Description of the Figures

The following figures are showed:

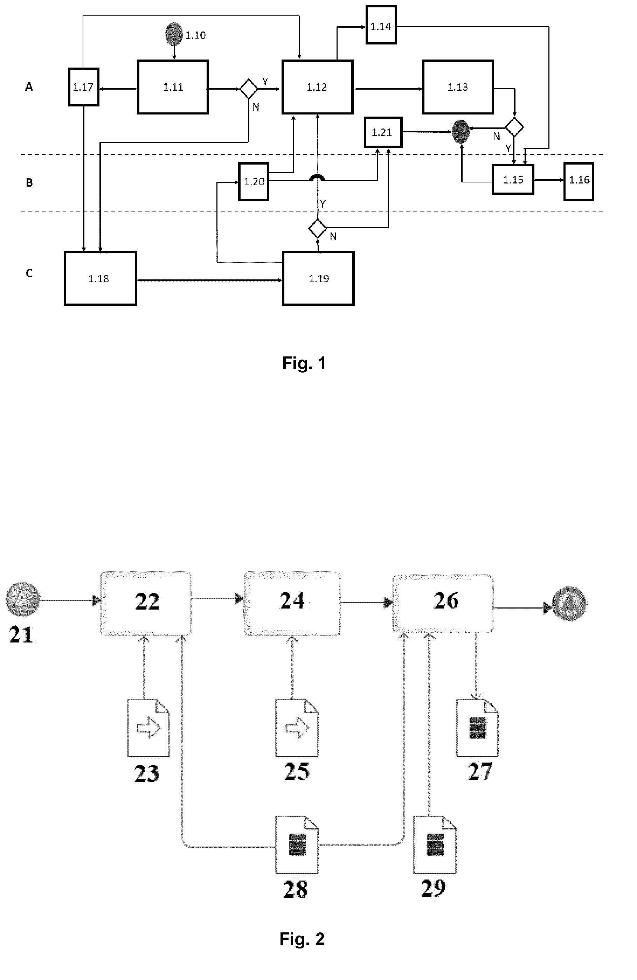

Fig. 1 shows a schematic representation of the meta-model or meta-process that describes the method of the present invention. This meta-method includes a subprocess for receiving and processing a certification request by a CRM (Customer Relationship Management) sector or equivalent, which includes layers A) and B) and a certification subprocess, carried out by an independent certification authority in layer C). The numbers indicate: 1.10 Tokenization request; 1.11 Registration, whose data follows two directions. On the left, a registration data profile is assembled (1.17), which is submitted to the application of the certification method (1.18). On the right, it is checked whether the registration data has already been certified. If positive (Y), the tokenization request record is submitted to Certmeter (1.12). Certmeter (1.12) receives the assessment report (1.19) in case of approval (Y) and the assessment (1.20) and forwards the measurements (1.14) for tokenization (1.15) in parallel with sending the approval report (1.13) which, if authorized, integrates the tokenization or, alternatively, does not forward the certification for tokenization (1.15). Tokenization 1.15 gives rise to a token profile (1.16). In the final assessment preparation step (1.19), if the report is not approved, a non-approval report (1.21) is generated. In the certification request processing part, whether approved or previously approved, the CRM uses the CertMeter device to obtain objective (numerical) measurements, i.e., coefficients, which can then be used in production processes related to certification. Finally, a token is generated in a DLT in order to publicize and authenticate the certification.
Fig. 2 schematically shows the process implemented by the CertMeter device. This process begins (21) with the project profile or description as input, which supports the selection of previously established measurement metrics (22) (23). Next, the metrics are associated with measurement rules (24) that describe how such metrics are aggregated into one or more numerical coefficients (25). Finally, using the certification results described in the project profile and/or in the evaluation report of a certifying entity (29), the performance grades or scores (26) of the project or process under certification are obtained, which are then aggregated to generate the coefficients and other measures (27). Profiles (28) are optionally fed to steps (22) and (26).

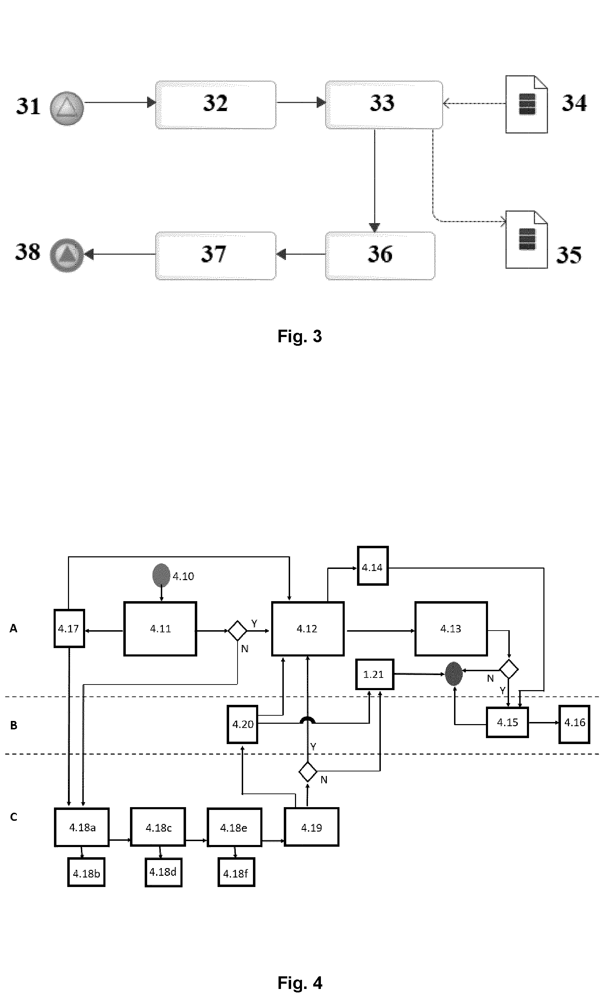

Fig. 3 shows an embodiment of the tokenization meta-model integrated with the present invention, in which the configuration of the metrics that will be stored in the token is performed, in parallel with the infrastructure configuration, such as determining the network addresses of the token generators, etc., followed by a configuration of the token on the chosen DLT platform, the listing of this token in a portfolio of tokenized processes or projects and finally the start of the tokenization. The following are illustrated: 31 the start of the process; 32 configuring the TGO Information Technology (IT) infrastructure; 33 configuring the TGO tokenization; 34 measurements of physical quantities; 35 TGO Profile; 36 Listing in the TGO Portfolio; 37 Starting tokenization; 38 end.
Fig. 4 shows a schematic representation of the meta-method or meta-process that describes the method of the present invention, similar to that described in Fig. 1, but applied to the system described in the co-pending patent application BR 10 2022 003708 6 of the present inventors, which describes ThingsGo.Online or TGO. This meta-method includes a sub-process for receiving and processing a certification request by a CRM (Customer Relationship Management) sector, which includes layers A) and B) and a certification sub-process, carried out by an independent certification authority in layer C). The numbers indicate: 4.10 Tokenization request; 4.11 Registration, whose data follows two directions. On the left, a registration data profile (4.17) is assembled, which is subjected to the application of the certification method (4.18a, 4.18c, 4.18e). On the right, it is checked whether the registration data has already been certified. If positive (Y), the tokenization request record is submitted to Certmeter (4.12). Certmeter (4.12) receives the assessment report (4.19) in case of approval (Y) and the assessment (4.20) and forwards the measurements (4.14) for tokenization (4.15) in parallel with sending the approval report (4.13) which, if authorized, integrates the tokenization or, alternatively, does not forward the certification for tokenization (4.15). Tokenization 4.15 gives rise to a token profile (4.16). In the final assessment preparation step (4.19), if the report is not approved, a non-approval report is generated (4.21). In the processing part of the certification request, whether approved or previously approved, the CRM uses the CertMeter device to obtain objective (numerical) measurements, i.e., coefficients, which can then be used in production processes related to certification. Optionally, having the rule base criteria that classify into the three GIVEBACK^{®} levels (Bronze, Silver, Gold), CertMeter automatically checks which criteria have been met and classifies as not certified, bronze, silver, or gold. The correct parameterization of the Inference Engine allows this to be done automatically. Finally, a token is generated in a DLT in order to publicize and authenticate the certification. The certification steps by the Independent Certification Authority are illustrated within the context of this implementation, in which 4.18a represents the verification of minimum safeguards, 4.18b represents the analysis of safeguards, 4.18c represents the verification of DNSH (do not cause substantial harm), 4.18d represents the analysis of DNSH, 4.18e represents the verification of substantial contributions and 4.18f represents the profile of contributions. The Certifying Entity is automatically informed by Certmeter about compliance with each criterion and optionally which certification level the case falls into (bronze, silver, gold).

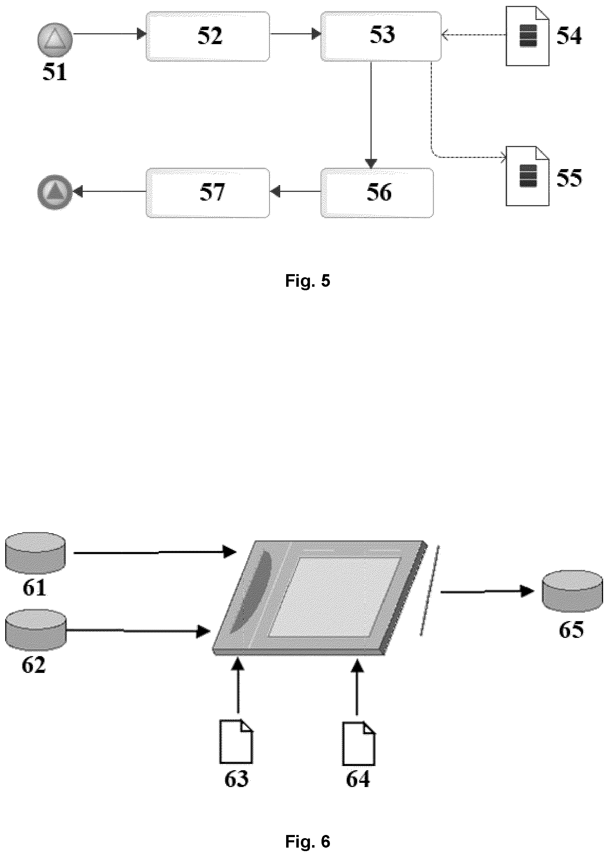

Fig. 5 presents a schematic representation of an embodiment of the process of the present invention operating in the TGO, starting at 51, with 52 being the IT infrastructure configuration, 53 the tokenization configuration, 54 the measurements, 55 the TGO profile, 56 the listing in the portfolio and 57 the start of tokenization.
Fig. 6 presents a schematic representation of an implementation of CertMeter in the form of a combination of hardware and software, represented by software embedded in a tablet or similar computer. The following are shown: 61 metrics; 62 rules; 63 profile; 64 report; and 65 measurements.

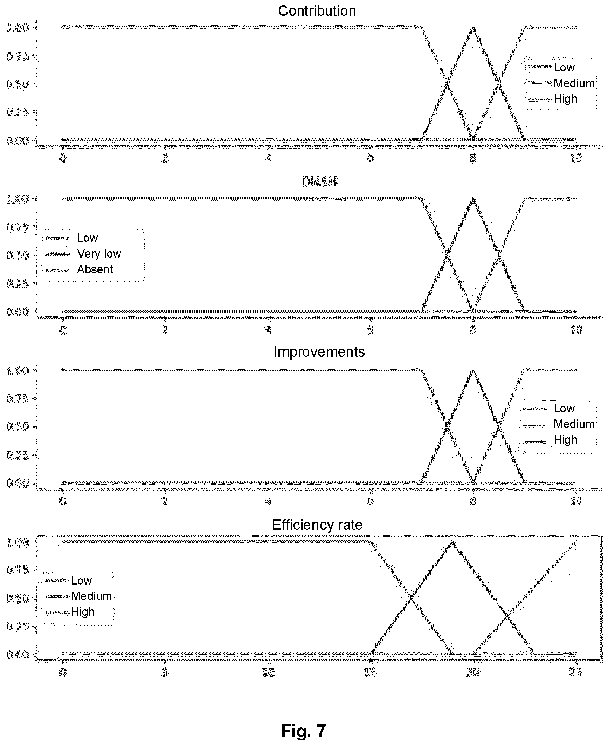

Fig. 7 presents a CertMeter fuzzy rule base applied to TGO project certifications. Examples include the Substantial Contribution and DNSH criteria from the European Union's Taxonomy: Final report of the Technical Expert Group on Sustainable Finance, March 2022, as well as the Improvements criterion, specific to TGO. The criteria are mapped in such a way as to consider a more outstanding performance only after 70% of these criteria are met, in addition to the respective shaded areas between the classifications, and within a scale of 0 to 10. The Efficiency Rate, in turn, is intelligently generated by the CertMeter Inference Engine. In this case, this rate was modeled in a similar way to the input criteria, but on a scale of 0 to 25, interpreted as a percentage of extra performance of the evaluated project.

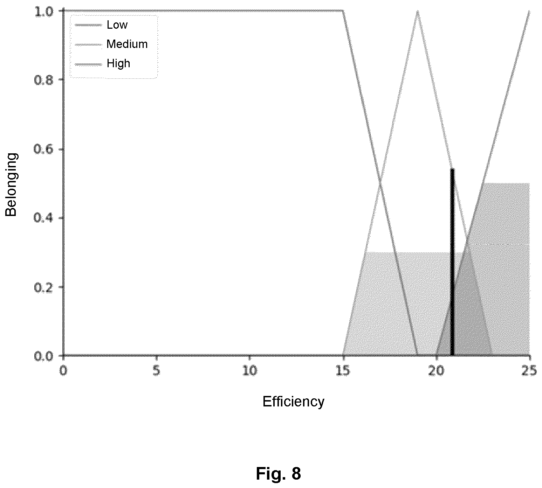

Fig. 8 shows the computation by the CertMeter Inference Machine, using the metrics presented in Fig. 7, of a data input represented by the vector [8.7, 8.5, 8.5], corresponding to the use of the device of the invention in the example described.

### Detailed Description of the Invention

The present invention provides a device, system and method comprising computer program processing.

The following definitions are used in the present patent application.

The expression "Certification" means a formal declaration proving a certain competence or capacity, issued by someone who has credibility or technical, legal, or moral authority to do so.

In the present invention, the Certification must be formal, that is, it must be done following a previously specified procedure and be embodied in a supporting document.

The invention is also defined by the following clauses.

Method for measuring process performance and/or for automating certification procedures comprising:
i) a step for measuring quantities associated with certification;
ii) a step for generating objective classification metrics and one or more inferences to enable the generation of one or more numerical coefficients; and
iii) a step of processing, storing data and recording measurements, metrics, or coefficients in Blockchain or Distributed Ledger Technology (DLT).

Method as described above in which the metrics generation step includes scales defined by membership functions: contribution, improvement, efficiency, DNSH.

Method as described above in which said processing step includes at least one step of verifying the minimum safeguards; verifying the DNSH; and/or evaluating the substantial contribution, prior to registration in Blockchain or Distributed Ledger Technology (DLT).

Method as described above additionally comprising a certification tokenization step for the publication, authentication, and/or backup of the certification results.

Method as described above additionally comprising a step of evaluating technical improvements for increased performance or positive impact.

Method as described above where the improvement evaluation step is done using Fuzzy Logic to implement an inference machine.
- if Contribution is low OR DNSH is low OR Improvements are low THEN Efficiency is low;
- if Contribution is average AND DNSH is very low AND Improvements are low THEN Efficiency is average;
- if Contribution is high AND DNSH is non-existent or insignificant AND Improvements are high THEN Efficiency is high.

Method as described above wherein additionally comprising the following steps:
- create a public and private cryptographic key pair and account address on the blockchain;
- store internally this set of cryptographic artifacts in non-volatile memory on the device, including security mechanism;
- request the configuration of the account address on the blockchain where the device tokens will be sent; and
- store internally this address in non-volatile memory to the device.

Method as described above in which GIVEBACK^{®} certificates are classified according to the level of detail of the certification, being:
- GIVEBACK^{®} Bronze: credit generation process certified by a TGO partner entity;
- GIVEBACK^{®} Silver: credit generation process and specific case of generation certified by a TGO partner entity; and
- GIVEBACK^{®} Gold: credit generation process and specific case of generation certified according to international standards, such as, but not limited to, ISO 14000 or UNFCCC standards, by any recognized certifying entity.

A minimum subset of criteria qualifies for Bronze classification; an additional set adds to Silver; and finally, the full set of criteria, according to established international standards, qualifies for Gold classification. These criteria are used in the Rules Base of this embodiment device to make the classification automatic.

Device and system for measuring process performance and/or for automating certification procedures, comprising:
i) a device for measuring and metricizing quantities associated with certification;
(ii) a processor and a storage medium with computer-processed program instructions; in which said processor executes a certification meta-method integrated with: said device; and a distributed or blockchain digital recording process of the metrics; and
iii) communication interfaces with computer networks, to provide recording of measurements in Blockchain or Distributed Ledger Technology (DLT);

Device and system as described above in which said meta-method performs, in this order, the following checks/evaluation: verification of minimum safeguards; verification of DNSH; and evaluation of substantial contribution.

Device and system as described above additionally comprising an inference engine that provides for the generation of one or more numerical coefficients.

Device and system as described above wherein the rule base of the inference engine includes: if Contribution is low OR DNSH is low OR Improvements are low THEN Efficiency is low; if Contribution is medium AND DNSH is very low AND Improvements are low THEN Efficiency is medium; if Contribution is high AND DNSH is non-existent or negligible AND Improvements are high THEN Efficiency is high. In one embodiment, these rules are not fixed, being configurable or added to other rules, such as to classify a certificate as bronze, silver, or gold. In one embodiment, the fuzzy sets employed are defined in different ways, so as to reflect the human cognitive process and automate it.

Device and system as described above wherein said processor is configured to implement an integrated tokenization meta-process wherein:
- cryptographic keys are generated;
- based on the measurements generated by the device, the Token is configured by applying the respective coefficients;
- the configured token is listed in the DLT platform token portfolio.

Device and system as described above wherein said processor is configured to implement the following steps:
- creation of a public and private cryptographic key pair and account address on the blockchain;
- storage internally of this set of cryptographic artifacts in non-volatile memory on the device, including security mechanism;
- request to configure the account address on the blockchain where the device tokens will be sent; and
- storage internally of this address in non-volatile memory to the device.

The issuance of tokens or digital certificates (tokenization) stored in distributed ledgers makes the Certification documentation publicly recognized, authenticated, and perpetuated in a storage network that naturally provides backup copies. Thus, associating tokenization with certification processes brings a series of benefits, which is one of the purposes of the present invention.

An important point in the context of the invention is that, usually, the certification process produces a large amount of information and has performance measurement methods and metrics associated with the certification topic. However, the result of this entire process is, at most, a linguistic scale for classifying the certified entity. This technical difficulty is at least partially overcome by the present invention, which adds to the technique a certification meta-method associated with a measuring device, herein called CertMeter. The invention provides for the use of objective classification metrics and an inference that allows the generation of one or more numerical coefficients, which are used in production processes in order to make the certification results objective. Additionally, the invention integrates a certification tokenization subprocess that enables the publication, authentication, and backup of the certification results.

The invention is particularly useful for minimizing subjectivities, that is, making the results of a certification objective, to enable their registration in blockchain and/or DLT networks for integration into systems for issuing digital assets or tokens backed by authenticated metrics.

The device and system of the present invention is particularly useful for online documentation and tokenization, in distributed digital registry or distributed digital ledger platforms or technologies, of metrics related to certification processes.

The device or system of the invention, called CertMeter, includes at least one of the following aspects/means: i) a storage medium with computer-processed program instructions, to cause a processor to execute aspects of the present invention; ii) communication interfaces with computer networks, to allow the recording of measurements in Blockchain or Distributed Ledger Technology (DLT).

The method of the present invention comprises an integrated certification meta-process, which provides the data to the device called CertMeter which, after performing the computations described in this invention, records them in a Blockchain or Distributed Ledger Technology (DLT).

In the present invention, the expression "meta-process" should be understood as a process that can be adapted or parameterized as needed.

A relevant aspect of the invention is to provide a tool for objectively measuring the results of a certification process of a project or a production process, as well as their registration in Blockchain or DLT-type networks/systems to provide integration with a system for issuing digital assets or tokens backed by such real and authenticated metrics.

In the present invention, the expression "objective measurement" should be understood as the transformation of various criteria, associated with certification, into one or more numerical coefficients, which are then used in production processes or various financial calculations. In this way, objective measurement makes it possible to objectively differentiate various certified entities, for example, using partial classifications of their performance, obtained during the certification process, to adjust production processes and/or financially reward entities that stand out in performance.

The system of the present invention operates in a system comprising a plurality of functional items with high cohesion and low coupling, implemented in a combination of hardware and software. In one embodiment, said layers include: a) a computerized, parameterizable system for controlling the entire certification meta-process integrated with CertMeter and the tokenization mechanisms, b) an embedded hardware and software device that implements CertMeter and c) a cryptography layer for performing transaction signatures in blockchain or DLT networks.

Fig. 1 represents the meta-process of the invention, described as follows: 1) The CRM (or equivalent) receives a Certification request according to the invention; 2) This request is processed and generates a Profile of the project or process to be certified); 3) Check if the project or process already has a recognized certification in the application area. 3.1) If it does, proceed directly to use CertMeter (6), using only the Profile generated in (2) as input for this device. 3.2) If it does not, proceed to (4). 4) The Profile of the project or process is forwarded to the Independent Certifying Entity (ECI), which will apply the certification process according to its standards or with standards recognized in the area; 5) After applying the certification method, a Report is produced by the ECI. 5.1) If the Report approves the certification, proceed to (6) forwarding the Report as input to the CertMeter device. 5.2) If the Report does not approve the certification, it is forwarded to the CRM, which then communicates the disapproval of the certification and ends the process. 6) CertMeter receives as input the Project or Process Profile and optionally the ECI Report (if this was triggered in 5.1) and with these and the internal metrics and rules, allows the CRM to perform the Certification Metrification. 7) The CRM reports the approval and obtains the final approval from the certification applicant for tokenization of the project or process. 7.1) If there is authorization, proceed to (8). 7.2) If there is no authorization, close the request. 8) The tokenization method is described in Fig. 3. Using as input the metrics produced by the CertMeter device, at the end this process generates a Token Profile related to the project or process in a DLT or similar.

Fig. 2 describes the method implemented by CertMeter, described as follows: 1) The CRM (or equivalent) selects a set of metrics applicable to the certified project or process, indicated by its generated Profile, and which vary with the area and sub-area of application of the certification. These metrics are obtained from a metric base containing, for each metric, its application and its numerical and/or linguistic and/or fuzzy scale. In the case of using Fuzzy Logic (fuzzy), the metric base must also contain a Defuzzyfication Method, which transforms all measurements into numerical values belonging to the set of Real Numbers. 2) According to the set of metrics selected in (1), CertMeter intelligently selects a set of rules applicable to these metrics. These rules describe how the set of metrics interrelate, as well as how the generated numerical coefficients are derived. Typically, this rule base defines each rule as a set of antecedents and consequents, with or without modifiers. 3) Using the Project or Process Profile and optionally the Report produced by ECI, the CRM performs the necessary measurements through technical knowledge of the application area, using the scales defined for the metrics. The device intelligently performs the inference, based on the set of rules selected in (2), and produces one or more numerical coefficients that represent the objective measurement of the certification.

Fig. 3 describes a tokenization meta-process integrated into this invention, described as follows: 1) The CRM (or equivalent) configures the Information Technology infrastructure, which includes the generation of cryptographic keys, the configuration of network terminals and connections with the DLT or similar, which are necessary to generate the tokens. 2) The CRM, using the measurements generated by CertMeter, configures the Token, applying the coefficients and other measurements to it. This configuration generates a Token Profile, describing it according to its objective certification measurements. 3) The configured Token is listed in the token portfolio of the DLT or similar platform. 4) After the applicable checks, the Token is generated.

In one embodiment, the present invention includes a means for creating and securely storing a pair of public and private cryptographic keys, as well as the blockchain account address, which are used to record in the blockchain the quantities measured by the device subject to the patent. In this embodiment, the device implements the following configuration steps: a) creation of a pair of public and private cryptographic keys and a blockchain account address; b) storage of this set of cryptographic artifacts in non-volatile memory internally in the device, with the appropriate security mechanisms to prevent external access; c) Request for configuration of the account address in the blockchain to which the device tokens will be sent; d) storage of this address in non-volatile memory internally in the device.

In some of the examples described below, the invention is useful in the field of certification of sustainable projects and attitudes. Due to its peculiarities and technical effects, the invention is a particularly useful tool for proving compliance with requirements for obtaining tax benefits in environmental incentive programs.

### Example 1 - Certification of the issuance system and tokens backed by authenticated environmental conservation metrics, TGO

This embodiment references co-pending patent application BR 10 2022 003708 6, entitled Integrated System and Method for the Issuance of Digital Assets or Tokens Backed by Authenticated Conservation Metrics, by the same inventors, which describes ThingsGo.Online or TGO. It also references co-pending patent application BR 10 2022 003697 7, entitled Device and System for Measuring Quantities, Processing Data and Integrating with a Digital Asset or Token Issuance System, which describes the socalled Joker.

In this embodiment, specific methods (and their processes) for TGO are applied, which includes parameterization and inclusion of new activities and information elements in the meta-method of the present invention, demonstrating the latter's adaptability.

Referring to the figures, Fig. 4 shows an embodiment of the meta-method of this invention applied to the TGO. In one embodiment, said method is described as follows:
1) The CRM (or equivalent) receives a request for Certification in accordance with the invention;
2) This request is processed and generates a Profile of the project or process to be certified;
3) Check if the project or process already has a recognized certification in the application area. 3.1) If it does, go directly to using CertMeter (6), using only the Profile generated in (2) as input for this device. 3.2) If it does not, go to (4).
4) The project or process profile is forwarded to the Independent Certification Body (ECI), which will apply the certification process in accordance with the precepts established by the document Taxonomy: Final report of the Technical Expert Group on Sustainable Finance, dated March 2022, of the European Union. It should be added that the present invention advocates an inversion in the activities of the process proposed by the European Union, that is, first verifying the Minimum Safeguards, then the "Do No Substantial Harm" (DNSH) criteria, and only then verifying the Substantial Contribution. This is because in the approach of the present invention, only after meeting the minimum safeguards that must be followed for the evaluation of the DNSH, and only after verifying these that the contribution should be evaluated. The motivation for this is that it makes no sense to allocate resources to the evaluation of the contribution if the project does not meet the safeguards and/or has a level considered high of negative effect in other areas. In summary, the TGO certification process for this implementation comprises the following steps:
   4.1) Verify Minimum Safeguards: the design or process must be compatible with the safeguards related to the Declaration of Human Rights and Fundamental Rights and Principles at Work. Only if the safeguards are met proceed to 4.2.
   4.2) Check the "Do No Substantial Harm" (DNSH) conditions: the project or process must not cause harm to any of the other environmental objectives defined in the proposed regulation and to which it does not contribute. To this end, the Table of Technical Screening Criteria by NACE area (classification of economic activities according to the European Community) must be consulted. Only if the impact on other areas is at most low should the project or process be proceeded to 4.3.
   4.3) Verify Substantial Contribution: the project or process must meet and contribute significantly to at least one of the six environmental objectives as defined in the Regulation. To this end, the Table of Technical Screening Criteria by NACE area must be consulted.
5) After applying the method described in (4), a Report is produced by ECI. 5.1) If the Report approves the certification, proceed to (6) forwarding the Report as input to the CertMeter device. 5.2) If the Report does not approve the certification, it is forwarded to CRM, which then communicates disapproval of the certification and ends the process.
6) CertMeter receives as inputs the Project or Process Profile and optionally the ECI Report (if this has been triggered in 5.1) and with these and the internal metrics and rules, it allows the CRM to perform the Certification Metrics, which can also include a classification of the token in bronze, silver or gold, as described.
7) The CRM reports the approval and obtains final approval from the certification applicant for tokenization of the project or process. 7.1) If there is authorization, proceed to (8). 7.2) If there is no authorization, close the request.
8) The tokenization method in TGO is described in Fig. 5. Using as input the metrics produced by the CertMeter device, at the end this process generates a TGO Token Profile related to the project or process in a DLT or similar.

Table 1 shows the Technical Screening Criteria by NACE area, providing technical screening criteria for economic activities in the different sectors of the Economy that are associated with Sustainability. This table, according to the document Taxonomy: Final report of the Technical Expert Group on Sustainable Finance, March 2022, of the European Union, has the following format:

**Table 1**

| **Classification** | | **Environmental Contributions** | | | | | | | |
|---|---|---|---|---|---|---|---|---|---|
| NACE Macro Sector | NACE Activit y | Substantial Contribution | | | DNSH Climat e Chang e | DNSH water | DNSH Circula r Econo my | DNSH Polluti on | DNSH Ecosy stems |
| | | Own Perform ance | Enablin 9 Activity | Transit ional Activity | | | | | |

The ECI must use the Technical Criteria Table to identify which criteria are applicable to the project or process in question and then answer whether the project or process meets them and to what degree, using a predefined scale, optionally numeric or fuzzy.

Fig. 5 shows, in macro form, the sequence of steps to Tokenize a project or process in TGO, using the present invention. In one embodiment, these steps are described as follows:
1) The CRM (or equivalent) configures the Information Technology infrastructure, which includes the generation of cryptographic keys, the configuration of network terminals and connections with the DLT or similar, which are necessary to generate the tokens. In TGO, this involves configuring, for example, a Joker device, which generates the tokens.
2) The CRM, using the measurements generated by CertMeter, configures the Token, applying the coefficients and other measurements to it. This configuration generates a TGO Token Profile, describing it according to its objective certification measurements.
3) The configured Token is listed in the TGO token portfolio on the DLT platform or similar.
4) After the applicable checks, such as whether the Joker device or similar is able to generate tokens, these begin to be generated.

Fig. 6 shows an embodiment of CertMeter, implemented by a combination of hardware and software on a tablet computer, which stores the previously configured metrics and rules databases, and receives, via data network or other means of data input, the Project, or Process Profile and the ECI Report (if applicable). With this information, the user applies technical knowledge of the certification area and establishes measurements, based on the Profile and the Report. CertMeter's inference engine intelligently calculates the applicable coefficients and stores them in a measurement database.

### Example 2 - Token certification in TGO

In this embodiment, a simplified example of application of the present invention in TGO is showed. The objective of the example is to show how a coefficient generated by the invention is applied to a token based on physical assets.

The metrics, rules, and way of calculating the coefficient, as well as the conversion of tokens are merely illustrative and are not limited to the example described here.

This example analyzed the case of a photovoltaic solar power generation plant with a capacity of 1 MW.

For the purpose of simplifying calculations, and for the purpose of illustrating only, each 100MW generated generates a TGO token, with optionally fractional token generations.

For the purpose of simplification, it is considered that the ECI generates a single measurement relating to the Substantial Contribution as well as a single measurement relating to the DNSH criteria.

The Minimum Safeguards criteria are binary and define whether the project is approved or not, therefore, in this example, there is no measurement of them, only a measurement with a binary result.

The steps of the invention method are described below, applied to the case of this example:
1) The CRM receives a request for Certification of the "Photovoltaic Energy Generation Plant," containing its geolocation, photos, generation data, description of the use of the generated energy, description of the profiles of the workers involved in its operation, and whatever else applies to evaluate the project;
2) This request is processed and generates a Project Profile of the plant to be certified;
3) The plant design does not have any applicable certification, therefore, proceed to step (4).
4) The project profile is forwarded to the Independent Certification Authority (ECI), which applies the certification process to the TGO. The plant design safeguards are checked and, if there are no impediments, the ECI team proceeds to assess the Substantial Contribution, which results in a score of 8.7, and the "Do No Substantial Harm" (DNSH), which results in a score of 8.5.
5) After applying the method described in (4), a Report is produced by ECI. This Report approves the project of the referred plant.
6) CertMeter receives the Project Profile and the ECI Report as inputs and, with these and the internal metrics and rules, allows the CRM to perform the Certification Metrics.

### Example 3 - Token certification in TGO with improvement bonuses

In an alternative embodiment, in the case of TGO, technical improvements that increase the performance or positive impact of the project are also evaluated. In this way, they are used together with the DNSH and Substantial Contribution criteria to generate a Performance Rate for the project. The CRM then performs an evaluation of the Improvements, which generates a score of 8.5 for the project. In this embodiment, Fuzzy Logic is used to implement the CertMeter inference engine in this example, with the metrics and their scales defined by Membership Functions shown in Fig. 7. The Rule Base used in the device's Inference Engine is as follows:

If Contribution is low OR DNSH is low OR Improvements are low THEN Efficiency is low. If Contribution is medium AND DNSH is very low AND Improvements are low, THEN Efficiency is medium. If Contribution is high AND DNSH is non-existent AND Improvements are high, THEN Efficiency is high.

It is important to note that since a fuzzy inference machine is used in this example, it is not necessary to create a rule base that covers all possible combinations of scale values for the technical criteria. The use of a Centroid-type defuzzification method leads to obtaining a degree of 20.85%, as well as belongings of 0.0 to the Low category, 0.54 to the Medium category and 0.17 to the High category, as shown in Fig. 8. These values are used to calculate a bonus in the generation of the TGO token.

7) The CRM reports the approval of the project, presenting the ECI Report and the generated coefficient to the client. The client agrees to the tokenization of the XYZ plant.

8) The TGO token for the plant referred to in example 2 is configured using a token generation coefficient of 1.2085 per MW of energy generated. This means that for each 1 MW generated, 1.2085 tokens are subsequently generated, since a bonus equivalent to 20.85% was applied, equivalent to the Performance Rate obtained by the project using the CertMeter device. After configuring the IT infrastructure that optionally includes the configuration of a Joker device as described in the co-pending patent application BR1020220036977, incorporated herein by reference, other parameters of the DLT platform are defined. Then, the generation of TGO tokens is initiated, as the energy is produced by said plant.

### Example 4 - Generation of risk coefficient associated with token Generation

In this embodiment, Certmeter generates useful coefficients to assess the magnitude of risk related to token generation. In this example, referring to the results presented in Fig. 8, the project being certified has degrees of membership of 0.0 in the Low category, 0.54 in the Medium category, and 0.17 in the High category, that is, it is predominantly Medium, with no membership in Low and secondary membership in High. A risk classification for this case is BBA. In cases where full membership is Medium, the risk classification is BBB.

Finally, it should be noted that the certification processes that use the present invention are more precise, better documented, traceable, free from or with substantially less human subjectivity, in addition to being much more energy efficient and/or reducing the carbon footprint by minimizing human displacement. In this context, its very use is a sustainable attitude that can give rise to tokenization with the use of the invention described in the co-pending patent application BR102022003708-6, from the same inventors and which describes ThingsGo.Online. In one embodiment, the tool is recursive: the tokenization of sustainable attitudes being performed by ThingsGo.Online and the certification being performed by Certmeter; and certification by Certmeter also gives rise to the tokenization, by ThingsGo.Online, of the benefit of the present invention.

The applicant, when filing this application with the competent body/guarantor, seeks and intends to: (i) name the authors/inventors in respect of their respective moral, copyright and patrimonial rights related to their works; (ii) unequivocally indicate that he/she is the holder of the business or industrial secret and the holder of any form of intellectual property derived therefrom and that the applicant desires; (iii) describe in detail the content of the creations and the secret, proving their existence in the physical and legal planes; (iv) obtain protection for his/her creations of the spirit, as provided for in the Copyright Law; (v) establish the relationship between the examples/realizations and the creative, ornamental, distinctive or inventive concept according to the applicant's cognition and its context, to clearly demonstrate the scope of his/her protected and/or protectable intangible asset; (vi) request and obtain the additional rights provided for patents, if the applicant chooses to continue with the administrative procedure until the end.

Any future disclosure or publication of this document does not, in itself, constitute authorization for commercial use by third parties. Even if the content becomes part of the physical world accessible to third parties, the disclosure or publication of this document under the terms of the law does not eliminate the legal status of secret, serving only and solely the spirit of the Law to: (i) serve as proof that the creator created the objects described herein and expressed them in a physical medium, which is this report itself; (ii) unequivocally indicate their owner/holder and authors/inventor(s); (iii) notify third parties of the existence of the creations and of the aforementioned industrial secret, of the content for which intellectual protection is or will be requested under the terms of the Law, including patent protection and the date of its filing, from which priority rights will be granted and the term of validity of patent exclusivity may begin, if applicable; and (iv) assist in the technological and economic development of the Country, from the revelation of the creation, if this occurs, and the authorization of the use of the secret solely and exceptionally for the purposes of studies and/or development of new improvements, thereby avoiding parallel reinvestment by third parties in the development of the same asset.

It is hereby noted that any commercial use requires authorization from the authors, or the owner/holder and that unauthorized use gives rise to sanctions provided for by law. In this context, given the extensive detail in which the creation, concept and examples were disclosed by the applicant, those skilled in the art may, without much effort, consider other ways of implementing the present creation and/or invention in ways that are not identical to those merely exemplified above. However, such ways are or may be considered as within the scope of one or more of the attached claims.

## Claims

1. Method for measuring process performance and/or for automating certification procedures **characterized in that** it comprises:
i) a step for measuring quantities associated with certification;
ii) a step for generating objective classification metrics and one or more inferences to enable the generation of one or more numerical coefficients; and
iii) a step of processing, storing data and recording measurements, metrics, or coefficients in Blockchain or Distributed Ledger Technology (DLT).

2. The method according to claim 1, **characterized in that** the step for generating metrics includes scales defined by membership functions: contribution, improvement, efficiency, DNSH.

3. The method according to claim 1 or 2, **characterized in that** said processing step includes at least one step of verifying the minimum safeguards; verifying the DNSH; and/or evaluating the substantial contribution prior to registration in Blockchain or Distributed Ledger Technology (DLT).

4. The method according to any one of claims 1 to 3, **characterized in that** it further comprises a step of tokenizing the certification for the publication, authentication, and/or backup of the certification results.

5. The method according to any one of claims 1 to 4, **characterized in that** it further comprises a step of evaluating technical improvements for increased performance or positive impact.

6. The method according to claim 5, **characterized in that** said improvement evaluation step is done with Fuzzy Logic to implement an inference machine.

7. The method according to claim 6, **characterized in that** the rule base of the inference machine includes:
- if Contribution is low OR DNSH is low OR Improvements are low THEN Efficiency is low;
- if Contribution is average AND DNSH is very low AND Improvements are low THEN Efficiency is average;
- if Contribution is high AND DNSH is non-existent or insignificant AND Improvements are high THEN Efficiency is high.

8. The method according to any one of claims 1 to 7, **characterized in that** it further comprises the following steps:
- create a public and private cryptographic key pair and account address on the blockchain;
- store internally this set of cryptographic artifacts in non-volatile memory on the device, including security mechanism;
- request the configuration of the account address on the blockchain where the device tokens will be sent; and
- store internally this address in non-volatile memory to the device.

9. Device and system for measuring process performance and/or for automating certification procedures **characterized in that** it comprises:
i) a device for measuring and metric quantities associated with certification;
ii) a processor and a storage medium with computer-processed program instructions; in which said processor executes a certification meta-method integrated with said device; and a distributed or blockchain digital recording process of the metrics; and
iii) communication interfaces with computer networks to provide recording of measurements in Blockchain or Distributed Ledger Technology (DLT).

10. The device and system according to claim 9, **characterized in that** said meta-method performs, in this order, the following checks/evaluation: checking of minimum safeguards; checking of DNSH; and evaluation of substantial contribution.

11. The device and system according to claim 9 or 10 **characterized in that** it further comprises an inference machine that provides the generation of one or more numerical coefficients.

12. The device and system of claim 11, **characterized in that** the rule base of the inference engine includes: if Contribution is low OR DNSH is low OR Improvements are low THEN Efficiency is low; if Contribution is medium AND DNSH is very low AND Improvements are low THEN Efficiency is medium; if Contribution is high AND DNSH is nonexistent or negligible AND Improvements are high THEN Efficiency is high.

13. The device and system according to any one of claims 9 to 12, **characterized in that** said processor is configured to implement an integrated tokenization meta-process wherein:
- cryptographic keys are generated;
- based on the measurements generated by the device, the Token is configured by applying the respective coefficients;
- the configured token is listed in the DLT platform token portfolio.

14. The device and system according to any one of claims 9 to 13, **characterized in that** said processor is configured to implement the following steps:
- creation of a public and private cryptographic key pair and account address on the blockchain;
- storage internally this set of cryptographic artifacts in non-volatile memory on the device, including security mechanism;
- request to configure the account address on the blockchain where the device tokens will be sent; and
- storage internally of this address in non-volatile memory to the device.
